# EUROPEAN PATENT SPECIFICATION

(11) **EP 1 599 008 B1**
(45) Date of publication and mention of the grant of the patent: **05.03.2008**
(21) Application number: 04291293.1
(22) Date of filing: 19.05.2004
(51) Int. Cl.: H04L 29/06

(54) **Method of providing a signing key for digitally signing, verifying or encrypting data**
Verfahren zur Bereitstellung eines Signierungsschlüssels zur digitalen Signierung, Überprüfung oder Verschlüsselung von Daten
Procédé permettant de fournir une clé de signature pour signer numériquement, vérifier or chiffrer des données

(43) Date of publication of application: 23.11.2005
(73) Proprietor: Alcatel Lucent, 75008 Paris (FR)
(72) Inventor: Rupp, Stephan, Dr., 74354 Besigheim (DE); Duspiva, Matthias, 71229 Leonberg (DE); Banet, Franz-Josef, 71665 Vaihingen (DE); Stegers, Hans Josef, 70825 Korntal (DE)
(74) Representative: Schmidt, Werner Karl

(56) References cited:
- WO-A-03/096140
- US-A1- 2003 237 004

## Description

The present invention relates to a method of providing a key, in particular for digitally signing, verifying or encrypting data to be exchanged between a first party and a second party, comprising the steps of transmitting an identification code, which is uniquely identifying said first party, from said first party to a gateway, verifying said identification code by said gateway by using an authentication server, and creating a signing key.

The present invention further relates to a mobile terminal and a gateway.

Prior art methods of providing signing keys for digitally signing data often rely on long-term signing keys which are not very secure since there is no possibility to dynamically alter said signing keys.

There are also methods which provide for dynamic creation/selection of signing keys, but these methods usually employ extra software and/or hardware such as personalized chip cards.

Furthermore, in many cases a contract with a trust center is required.

US 2003/0237004 A1 discloses a method and apparatus for certificate validation, wherein virtual private network (VPN) clients possess a public key cryptographic key pair. A support for a respective public key infrastructure (PKI) is provided by an access gateway and an authentication server in a shared manner.

WO 03/096140 discloses a system, method and computer program for authorizing a mobile station to use a product, service, access or other rights provided by a service provider through the use of digital signatures. These digital signatures are based on a shared signing key, and can be verified using a signature verification service. This system, method and computer program will validate the identity of the mobile station being used utilizing long term keys stored in the mobile station and an authentication center.

Hence it is an object of the present invention to provide an improved method of providing a signing key as well as an improved mobile terminal and an improved gateway.

Concerning the method of providing a signing key, said object is achieved by the features of the characterizing part of claim 1.

Although in the further description the term "signing key" is used, it is to be understood that said signing key describes a digital key in general and that said signing key may be used for verifying or encrypting data, in particular transaction data as well as it may be used for signing. Therefore, the subject matter of the present invention is not limited to the possibility of signing data.

The steps of transmitting and verifying an identification code and creating a signing key are for example implemented in the authentication mechanisms of GSM (global system for mobile communications) communication systems, wherein e.g. an international mobile station identity (IMSI) is used as said identification code.

The GSM authentication mechanisms are, inter alia, based on so-called A3- and A8-algorithms the latter of which is also called "voice privacy algorithm" since it is used to encipher voice data exchanged between a mobile GSM terminal and a GSM base transceiver station (BTS).

Said A8-algorithm e.g. yields a 64-bit number also denoted as ciphering key Kc. According to the present invention, this ciphering key is provided to said first party which e.g. uses a mobile terminal such as a cellular phone or a PDA (personal digital assistent) or a portable personal computer with a wireless GSM interface, and which may need a signing key in order to authenticate a transaction with said second party. The first party can use the ciphering key Kc obtained by the A8-algorithm of the GSM system as such a signing key.

In order to be able to verify a digital signature of the first party so obtained, said second party is also provided with said ciphering key, or signing key, respectively.

By using a signing key, which is according to the present invention derived from a ciphering key of the GSM system, it is possible for the second party to verify the integrity of signed data and to authenticate the first party. The second party may e.g. be an online service provider offering goods and/or services via the Internet and the first party may e.g. be a customer of said second party.

In particular, according to the method of the present invention, there is no need for additional software or hardware or even a contract with a trust center because the inventive method is based on an existing authentication mechanism of the GSM standard, which improves flexibility.

According to an embodiment of the present invention, a further signing key is created which depends on said signing key but which is not identical with the ciphering key of the A8-algorithm.

To improve the inventive method's security and increase the available code space, it is possible to create said further signing key depending on further data which is common to said first party and an authentication server but which is not available to the public. Said further data may e.g. be derived from any form of subscription data of the first party such as an address, further personal data or the like.

The creation of the further signing key may e.g. be performed by using state-of-the-art signing algorithms for use with symmetric keys such as the message authentication code or keyed hashing for message authentication, cf. e.g. RFC 2104 (Internet requests for comments).

According to another advantageous embodiment of the present invention, a long-life signing key is provided, which may be used for a plurality of signing and authenticating transactions. In order to enable a reuse of such a long-life signing key, another variant of the inventive method provides a step of storing said long-life signing keys.

Yet a further embodiment of the present invention is characterized by providing a plurality of signing keys, each of which is preferably valid for a single use only.

The advantages of providing a plurality of signing keys are obvious: only a single GSM authentication process is required which yields according to the present invention a plurality of signing keys and thus avoids further GSM authentications as long as there are signing keys left to use.

Said signing keys may be stored to a mobile terminal of the first party and to said gateway, from which they may be obtained by the second party later on. The storage of signing keys accelerates future signing processes and ensures the possibility of signing even if GSM functionality is (temporarily) not available which may be due to lacking network coverage.

Another advantageous embodiment of the present invention is characterized by providing an extra key or a plurality of extra keys which can be used to encipher said signing key(s). Said extra key(s) are transmitted and stored to a mobile terminal of the first party and to said gateway, which enables secure communication by means of enciphering said signing key(s) even if GSM functionality is not given.

By enciphering said signing key(s) with said extra key(s), it is possible to establish a secure transmission of signing keys between the mobile terminal of the first party and the gateway while using any kind of ad hoc network based on DECT (digital enhanced cordless telecommunications), bluetooth and IrDA systems instead of GSM communications.

According to a further advantageous embodiment of the present invention, said signing key is used for enciphering a communication between said first party and said second party which enables to also use ad hoc networks such as bluetooth for transmitting confidential signing data.

Another embodiment of the present invention proposes verifying a creditworthiness of said first party, which contributes to avoiding unnecessary GSM authentications. Said verification can e.g. be performed in said gateway before initiating a GSM authentication that is to be used for a future signing process. If the creditworthiness of said first party does e.g. not meet a predetermined critereon, no further transactions are permitted by said gateway. In particular, a GSM authentication for e.g. obtaining a signing key, is unnecessary.

A further very advantageous embodiment of the present invention is characterized by transmitting said signing key(s) and/or said extra key(s) via a short message service (SMS) of a mobile communications infrastructure and/or via another secure connection, to said first party and/or to said second party. By doing so, the risk of the signing key being intercepted by an unauthorized party is minimized. It is obvious that a multimedia message service (MMS) or the like can also be used for securely transmitting said signing key(s) and/or said extra key(s).

The object of the present invention is furthermore achieved by a mobile terminal and a gateway according to claims 12 to 14.

Further advantages and details of the invention are presented in the following detailed description with reference to the drawings, wherein
- Fig. 1a: depicts a first embodiment of the method according to the present invention,
- Fig. 1b: depicts a second embodiment of the method according to the present invention,
- Fig. 1c: depicts a third embodiment of the method according to the present invention, and
- Fig. 2: depicts a fourth embodiment of the method according to the present invention.

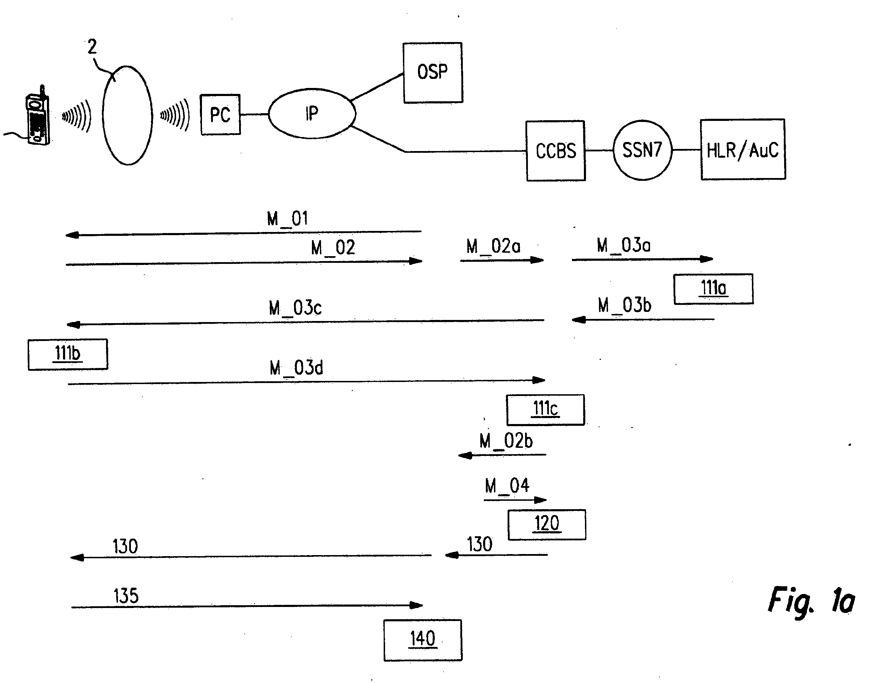

Fig. 1a shows a mobile terminal 1 of a first contracting party which contacts an online service provider OSP constituting a second contracting party.

As can be gathered from Fig. 1a, a connection between said mobile terminal 1 and said online service provider OSP is established firstly via a wireless access network 2, which may be an ad hoc network based on e.g. DECT, bluetooth or IrDA, and secondly via a personal computer PC, which in turn is connected to said online service provider via the Internet IP. The mobile terminal 1 and the personal computer PC are both equipped with a corresponding DECT, bluetooth or IrDA interface.

Instead of said personal computer PC any other type of access point such as e. g. a WLAN (Wireless Local Area Network) router or the like may be used.

Said first party desires to use an online service offered by said online service provider OSP and is thus required to authenticate itself to said online service provider OSP.

For this purpose, the online service provider OSP issues an authentication request M_01 to said mobile terminal 1 of said first party, which responds with an authentication response M_02 that comprises an identification code that is uniquely identifying said first party or its mobile terminal 1, respectively.

The identification code transmitted from the mobile terminal 1 to the online service provider OSP is a so-called international mobile subscriber identity (IMSI), which is stored to a SIM (subscriber identity module)-card that is comprised within the mobile terminal 1.

Said identification code is forwarded via message M_02a from said online service provider OSP to a customer care and billing system CCBS from which it is again forwarded to an authentication server AuC in form of a GSM standard authentication request M_03a.

Due to its position in the transmission configuration depicted in Fig. 1a, said customer care and billing system CCBS can also be understood as a gateway which manages e.g. contacting said authentication server AuC.

Said authentication server AuC may e.g. be comprised in a home location register (HLR) of a network operator a mobile network of which the first party is subscribed to. The authentication server AuC is connected to said customer care and billing system CCBS via a signalling system SSN7.

Upon receiving the GSM standard authentication request M_03a from said customer care and billing system CCBS, said authentication server AuC performs a GSM standard authentication, step 111a of Fig. 1a, which involves generating a so-called triplet comprising
- a random number,
- a signed response, and
- a ciphering key,
which is sent back to said customer care and billing system CCBS by means of message M_03b.

The random number of said triplet is forwarded to the mobile terminal 1 by means of message M_03c, which in step 111b continues the GSM standard authentication based on the known A3- and A8-algorithms of the GSM standard (cf. ETSI-GSM Technical Specification GSM 03.20, Version 3.3.2). This yields a so-called challenge response, i.e. the random number digitally signed with the same ciphering key used as in the authentication server AuC. Said challenge response is returned to said customer care and billing system CCBS via message M_03d.

In step 111c, said signed response from the authentication server AuC and said challenge response from said mobile terminal 1 are tested for identity within said customer care and billing system CCBS. If they are identical, the first party using said mobile terminal 1 has successfully authenticated itself to the customer care and billing system CCBS.

A positive authentication result M_02b is thereupon transmitted to the online service provider OSP which requests a signing key from the customer care and billing system CCBS via the message M_04, which also contains the international mobile subscriber identity (IMSI) of said mobile terminal 1.

Said signing key may be the ciphering key of the above mentioned triplet. In this case, creating a signing key is not necessary. Otherwise, a signing key is generated in step 120 of Fig. 1a and is provided to both the online service provider OSP and the mobile terminal 1, which is denoted by the arrows 130 in Fig. 1a.

Providing 130 said signing key is performed via a secure connection, which in case of the transmission to said online service provider may be a secured session over the Internet IP. Regarding the transmission to said mobile terminal 1, a secure wireless transmission is performed by using a short message service (SMS) of a GSM network.

Additionally, said signing key may itself be enciphered for the transmission to said mobile terminal 1 by using a suitable key which can be comprised of secret data that is only shared by said customer care and billing system CCBS and said first party 1, so as to increase transmission security of said signing key.

Now both the online service provider OSP and the first party with its mobile terminal 1, possess a signing key which can be used to digitally sign data.

For instance, the first party can exchange any unsigned/unciphered contracting parameters 135 such as a price or something else with the second party, i.e. the online service provider OSP, and additionally, both of them digitally sign said parameters. Then the first party also transmits said signed parameters to the second party, which simply compares its own signed parameters with the signed parameters received from the first party. If both sets of signed parameters are identical, integrity of parameters as well as the identity of said first party is ensured, and a transaction such as a contract or a payment 140 and the like may be performed.

Thus by using existing GSM authentication measures according to the messages M_03a, M_03b, M_03c, M_03d, it is possible to provide signing keys to the first and second party without extra hardware or software and especially without any contract to an (external) trust center.

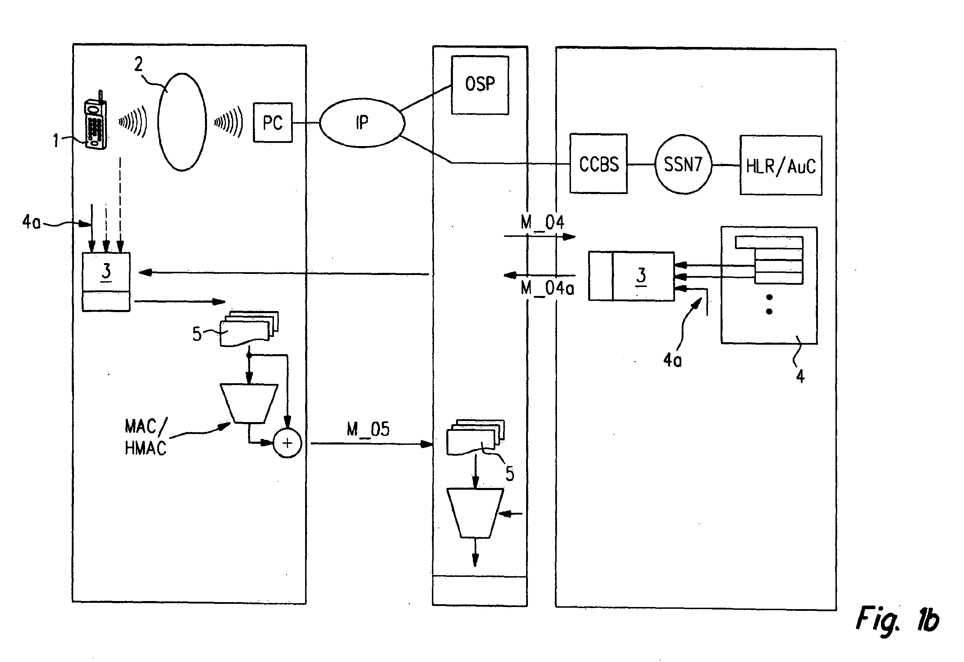

Fig. 1b shows a second embodiment of the present invention, which assumes a positive GSM authentication result according to step 111c of Fig. 1a and does not show the messages M_03a, M_03b, M_03c, M_03d which are part of the GSM standard authentication process described above.

After successful completion of the GSM authentication, cf. to message M_02b of Fig. 1a, the online service provider OSP requests a signing key from the customer care and billing system CCBS via the message M_04 (Fig. 1b, 1a), which also contains the international mobile subscriber identity (IMSI) of the mobile terminal 1, the latter one having been received by the online service provider OSP in the above described manner.

By sending the mobile terminal's IMSI to said customer care and billing system CCBS, an appropriate, individual key generation for said mobile terminal 1 is enabled. Otherwise within said CCBS it would be not clear for which mobile terminal a key generation is to be initiated, which is critical since said signing keys are specific to the corresponding mobile terminal 1 or its IMSI or the like.

The customer care and billing system CCBS has a key generator 3 for creating a signing key based on input data such as the international mobile subscriber identity (IMSI) of the mobile terminal 1, a session specific random number that has already been exchanged during GSM standard authentication, cf. message M_03b of Fig. 1a, a ciphering key and/or other secret data shared only by the first party and the authentication server AuC. Said input data is provided by a database 4 and the input is symbolized in Fig. 1b by the arrows 4a.

The signing key is created within said key generator 3 and then returned to the online service provider OSP by message M_04a.

The same key generator 3 is located within said mobile terminal 1, in particular on a SIM (subscriber identity module)-card within the mobile terminal 1, and the aforementioned signing key is also generated within said mobile terminal 1, based on the same input 4a.

After creation of said signing key within said mobile terminal 1, a standardized signing algorithm such as a message authentication code MAC or a keyed hashing for message authentication HMAC (cf. RFC 2104, Internet requests for comments) is applied to document 5 and the document 5 is sent to the online service provider OSP together with the so signed document 5 via message M_05.

Upon receiving said message M_05, the online service provider OSP verifies the document 5 and the signed document by applying a standardized signing algorithm such as a message authentication code MAC or a keyed hashing for message authentication HMAC, to said document 5. It is evident that both said mobile terminal 1 and said online service provider OSP must use the same standardized signing algorithms MAC/HMAC.

If the signed version of document 5 created by the online service provider OSP is identical to the signed version of document 5 created by said mobile terminal 1, the identity of the mobile terminal 1 and the integrity of the document 5 is proofed.

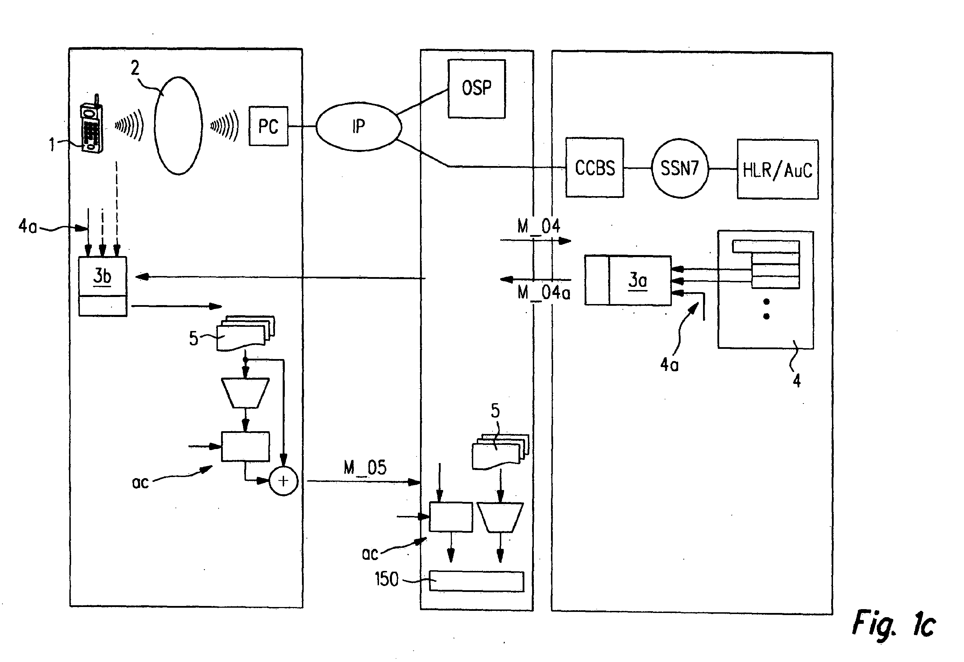

A further embodiment of the present invention is shown in Fig. 1c. In contrast to Fig. 1b, an asymmetric signing process is employed. For this purpose, a public key generator 3a, which may e.g. be comprised within said customer care and billing system CCBS, is fed with input data 4a from a database 4 as already explained above to generate a public signing key sent to the online service provider OSP via message M_04a on request M_04.

The mobile terminal 1 comprises a private key generator 3b that generates a private signing key which is used by an asymmetric ciphering algorithm ac to create a signature which is sent to the online service provider OSP together with the document 5 by means of message M_05.

The online service provider OSP then verifies the identity of the mobile terminal 1 and the integrity of said document 5 by employing prior art asymmetric ciphering and deciphering algorithms in step 150.

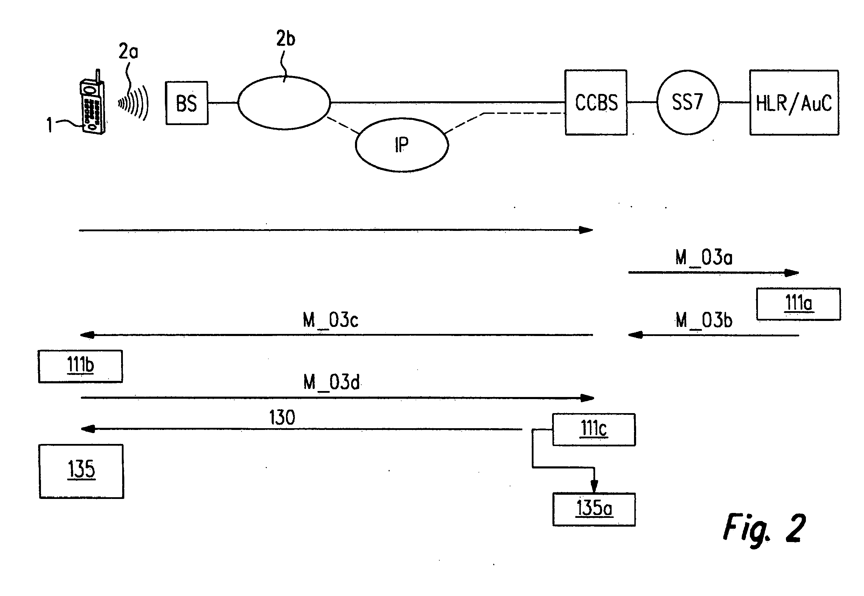

Fig. 2 shows a further embodiment of the method according to the present invention, in which a GSM standard authentication as already explained with reference to Fig. 1a, 1b, 1c is performed first.

After testing said signed response from the authentication server AuC and said challenge response from said mobile terminal 1 for identity within said customer care and billing system CCBS in step 111c, a plurality of signing keys is generated within said customer care and billing system CCBS and is provided to the mobile terminal 1 in step 130. The mobile terminal 1 stores said plurality of signing keys in step 135, and said signing keys are also stored to the customer care and billing system CCBS which is done in step 135a.

The storage of signing keys accelerates future signing processes and ensures the possibility of signing even if GSM functionality or any other communications channel that is usually used for securely transmitting signing keys particularly to said mobile terminal 1 is (temporarily) not available which may e.g. be due to lacking network coverage.

Yet a further variant of the present invention proposes to create at least one long-life token after a successful GSM standard authentication.

Both variants reduce a network load of the networks used for authentication, since a new authentication is only required if the long-life signing key has expired or each signing key of the plurality of signing keys has been used.

Furthermore, if a long-life signing key is still valid or if there are stored signing keys available in the mobile terminal 1, a user-transparent authentication can be performed, since accessing a stored signing key does not require user interaction. In this case, a mobile terminal comprising the stored signing keys should be password protected.

Said signing key(s) may generally be created/obtained by a ciphering key of the GSM standard authentication process. Additionally, secret data shared only by said first party and an authentication server AuC may be used to create a further signing key.

Providing an extra key or a plurality of extra keys which can be used to encipher said signing key(s) is also possible with the method according to the present invention. Said extra key(s) are transmitted and stored to the mobile terminal 1 of the first party and to said gateway CCBS, which enables a secure transmission of said signing key(s) even if GSM functionality is not given.

By enciphering said signing key(s) with said extra key(s), it is possible to establish a secure transmission of signing keys between the mobile terminal 1 of the first party and the gateway CCBS while using any kind of ad hoc network based on DECT (digital enhanced cordless telecommunications), bluetooth and IrDA systems instead of GSM communications.

Generally, any type of transaction requiring user authentication or verification of transaction data can be improved by the present invention. Especially payment transactions can advantageously be simplified while at the same time increasing transaction security.

It is also possible to use the signing keys obtained by the method according to the present invention for accessing so-called single-sign-on services. Single-sign-on services provide for a centralized authentication process by means of a single authentication entity also known as "identity provider" which performs user authentication for a plurality of service providers which define a "circle of trust". After such an authentication, the identified user can contract with any service provider of said circle of trust without being asked to re-authenticate. Single-sign-on services are e.g. provided by a so-called Liberty Alliance Project (cf. website http://www.projectliberty.org/).

Generally, prior to initiating a GSM standard authentication (M_03a, ...., Fig. 1a) a creditworthiness of said first party can be checked by said customer care and billing system CCBS. This eliminates the need to perform said GSM standard authentication if the first party has a poor creditworthiness and thus reduces a network load.

In those cases, in which said signing key is transmitted from said customer care and billing system CCBS to said mobile terminal 1 via a short message (SMS), the customer care and billing system CCBS is not required to pass the corresponding short message to a short message service center (SMSC). Instead, the customer care and billing system CCBS can request an address, in particular the so-called MSC_ID, of a serving mobile switching center (MSC) of said GSM network, from a home location register (HLR) and transmit the short message to the mobile terminal 1 directly. This prevents delays that may be caused by a processing of said short message within said short message service center (SMSC).

The method according to the present invention furthermore provides an added value for network operators since they can offer secure and easy transactions to users for payments e.g. at supermarkets, authentication of bidders at online auctions and the like.

It is also possible to provide payment applications which are implemented within said mobile terminal 1 in addition to a regular firmware of said devices. Said payment applications can be used to control the above explained transaction processes and may have direct access to a GSM interface of said mobile terminal 1.

A further advantage of the present invention is the fact that users of a corresponding mobile terminal 1 can spontaneously make use of said authentication according to the present invention to take part in tombolas or auctions which are for instance presented to attract people to marketing events. A separate, i.e. non-electronic, verification of an identity of such people is not necessary because of the authentication according to the present invention. Informing bidders and/or winners of said tombola can as well be conducted by e.g. said customer care and billing system CCBS in a sophisticated way via short messages (SMS), phone calls or electronic mail.

As already stated above, the subject matter of the present invention is not limited to the possibility of signing data.

It is also possible to use said signing key for (digitally) verifying or encrypting data as well, which depends on a respective application and the type of transaction provided. For instance, said signing key may be used to sign and/or encrypt and/or verify contracts, price lists, orders, transaction numbers used for electronic banking and the like.

According to a further embodiment of the present invention, if said online service provider OSP and said customer care and billing system CCBS both are comprised within a circle of trust administered e. g. by the Liberty Alliance, said online service provider OSP may initiate an authentication by said customer care and billing system CCBS without requesting an IMSI from said first party, because in this case said customer care and billing system CCBS itself issues an authentication request (cf. M_01, Fig. 1a). In this case, the customer care and billing system CCBS plays the role of an identity provider (IDP), too.

To further improve security, the customer care and billing system may protect an identity of said first party by using existing parameters such as a temporary mobile station identity (TMSI) and/or a location area index (LAI), cf. C. Lüders: Mobilfunksysteme, Vogel Verlag, Würzburg, 2001.

It is also possible to use separate anonymizing services that work independent of methods provided by communications networks.

## Claims

1. Method of providing a key for digitally signing and/or verifying and/or encrypting data to be exchanged between a first party and a second party, comprising the following steps:
- transmitting (M_02, M_02a) an identification code, which is uniquely identifying said first party, from said first party to a gateway (CCBS),
- verifying said identification code by said gateway (CCBS) by using an authentication server (AUC), wherein existing authentication mechanisms according to the GSM, global system for mobile communications, standard are used for said step of verifying,
- creating (120) a signing key by said gateway,
- providing (130) said signing key to said first party and/or to said second party, said method being **characterized in that** said step of creating (120) comprises creating a plurality of signing keys, each of which is valid for a single use only, and **in that** said step of providing (130) comprises providing said signing keys to said first party and to said gateway (CCBS) after creating said signing keys, and providing a signing key to said second party from said gateway (CCBS) upon a request from said second party to said gateway (CCBS).

2. Method according to claim 1, **characterized by** creating a further signing key which depends on said signing key and/or further data shared by said first party and said authentication server (AUC).

3. Method according to one of the preceding claims, **characterized by** providing (130) a long-life signing key which may be used for a plurality of signing and authenticating transactions.

4. Method according to claim 3, **characterized by** providing an extra key or a plurality of extra keys for enciphering said signing key or keys.

5. Method according to one of the claims 3 to 4, **characterized by** storing (135, 135a) said long-life signing key and/or said plurality of signing keys and/or said extra key and/or said plurality of extra keys.

6. Method according to one of the preceding claims, **characterized by** transmitting said signing key or keys and/or said extra key or keys via a short message service (SMS) of a mobile communications infrastructure and/or via a/another secure connection, to said first party and/or to said second party.

7. Method according to one of the preceding claims, **characterized by** using said signing key or keys for enciphering a communication between said first party and said second party.

8. Method according to one of the preceding claims, **characterized by** using said signing key or keys and/or said extra key or keys for authorizing transactions, in particular payment transactions, and/or for accessing single-sign-on services.

9. Method according to one of the preceding claims, **characterized by** verifying a creditworthiness of said first party.

10. Method according to one of the preceding claims, **characterized by** using a ciphering key Kc obtained by using an A8-algorithm according to the GSM standard as said signing key.

11. Gateway (CCBS) capable of performing the method according to one of the preceding claims.

## Patentansprüche

1. Verfahren zur Bereitstellung eines Schlüssels zum digitalen Signieren und/oder Überprüfen und/oder Verschlüsseln von Daten, die zwischen einer ersten Partei und einer zweiten Partei auszutauschen sind, das folgende Schritte umfasst:
- Senden (M_02, M02a) eines Identifizierungs-Codes, der die erste Partei eindeutig kennzeichnet, von der ersten Partei an einen Gateway (CCBS),
- Überprüfung des Identifizierungs-Codes durch den Gateway (CCBS) unter Verwendung eines Authentifizierungs-Servers (AuC), wobei vorhandene Authentifizierungs-Mechanismen entsprechend dem Standard GSM, Global Systems for mobile communications, für den Schritt der Überprüfung verwendet werden,
- Erzeugen (120) eines Signierungsschlüssels durch den Gateway,
- Bereitstellen (130) des Signierungsschlüssels an die erste Partei und/oder an die zweite Partei, wobei das Verfahren **dadurch gekennzeichnet ist, dass** der Schritt des Erzeugens (120) es umfasst, eine Vielzahl von Signierungsschlüsseln zu erzeugen, von denen jeder nur für eine einmalige Verwendung gültig ist, und **dadurch, dass** der Schritt des Bereitstellens (130) das Bereitstellen der Signierungsschlüssel an die erste Partei und an den Gateway (CCBS) nach dem Erzeugen der Signierungsschlüssel und das Bereitstellen eines Signierungsschlüssels an die zweite Partei von dem Gateway (CCBS) bei Anforderung von der zweiten Partei an den Gateway (CCBS) umfasst.

2. Verfahren gemäß Anspruch 1, **dadurch gekennzeichnet, dass** ein weiterer Signierungsschlüssel erzeugt wird, der vom ersten Signierungsschlüssel und/oder von weiteren Daten abhängt, die von der ersten Partei und dem Authentifizierungs-Server (AUC) gemeinsam genutzt werden.

3. Verfahren gemäß einem der vorherigen Ansprüche, **dadurch gekennzeichnet, dass** ein Signierungsschlüssel mit langer Lebensdauer bereitgestellt wird (130), der für eine Vielzahl von Signierungs- und Authentifizierungs-Transaktionen benutzt werden kann.

4. Verfahren gemäß Anspruch 3, **dadurch gekennzeichnet, dass** ein zusätzlicher Schlüssel oder eine Vielzahl von zusätzlichen Schlüsseln zur Chiffrierung des Signierungsschlüssels oder der Schlüssel bereitgestellt wird.

5. Verfahren gemäß einem der Ansprüche 3 bis 4, **dadurch gekennzeichnet, dass** der Signierungsschlüssel mit langer Lebensdauer und/oder die Vielzahl von Signierungsschlüsseln und/oder der zusätzliche Schlüssel und/oder die Vielzahl von zusätzlichen Schlüsseln gespeichert (135, 135a) werden.

6. Verfahren gemäß einem der vorherigen Ansprüche, **dadurch gekennzeichnet, dass** der oder die Signierungsschlüssel und/oder der oder die zusätzlichen Schlüssel über einen Kurzmitteilungs-Dienst (SMS) einer Mobilkommunikations-Infrastruktur und/oder eine andere sichere Verbindung an die erste Partei und/oder die zweite Partei gesendet werden.

7. Verfahren gemäß einem der vorherigen Ansprüche, **dadurch gekennzeichnet, dass** der oder die Signierungsschlüssel zur Chiffrierung einer Kommunikation zwischen der ersten Partei und der zweiten Partei verwendet wird.

8. Verfahren gemäß einem der vorherigen Ansprüche, **dadurch gekennzeichnet, dass** der oder die Signierungsschlüssel und/oder der oder die zusätzlichen Schlüssel für Authorisierungs-Transaktionen, insbesondere für Zahlungs-Transaktionen, und/oder für den Zugriff auf Single-Sign-On-Dienste verwendet werden.

9. Verfahren gemäß einem der vorherigen Ansprüche, **dadurch gekennzeichnet, dass** eine Kreditwürdigkeit der ersten Partei überprüft wird.

10. Verfahren gemäß einem der vorherigen Ansprüche, **dadurch gekennzeichnet, dass** ein Chiffrier-Schlüssel Kc, der durch Verwendung eines A8-Algorithmus gemäß dem GSM-Standard erhalten wird, als Signierungsschlüssel verwendet wird.

11. Gateway (CCBS), der in der Lage ist, das Verfahren gemäß einem der vorherigen Ansprüche auszuführen.

## Revendications

1. Procédé pour fournir une clé de signature numérique et/ou de vérification et/ou de cryptage des données à échanger entre une première partie et une deuxième partie, comprenant les étapes suivantes :
- Transmission (M_02, M_02a) d'un code d'identification qui identifie de manière unique ladite première partie depuis ladite première partie à une passerelle (CCBS),
- Vérification dudit code d'identification par ladite passerelle (CCBS) en utilisant un serveur d'authentification (AuC), des mécanismes d'authentification existants selon la norme GSM, Global System for Mobile communications - Système global de communication mobile, étant utilisé pour ladite étape de vérification,
- Création (120) d'une clé de signature par ladite passerelle,
- Fourniture (130) de ladite clé de signature à ladite première partie et/ou ladite deuxième partie, ledit procédé étant **caractérisé en ce que** ladite étape de création (120) comprend la création d'une pluralité de clés de signature, chacune d'entre elles n'étant valide que pour un usage unique, et **en ce que** ladite étape de fourniture (130) comprend la fourniture des dites clés de signature à ladite première partie et à ladite passerelle (CCBS) après avoir créé lesdites clés de signature et la fourniture d'une clé de signature à ladite deuxième partie depuis ladite passerelle (CCBS) sur demande depuis ladite deuxième partie vers ladite passerelle (CCBS).

2. Procédé selon la revendication, 1, **caractérisé par** la création d'une clé de signature supplémentaire qui dépend de ladite clé de signature et/ou des autres données partagées par ladite première partie et ledit serveur d'authentification (AuC).

3. Procédé selon l'une des revendications précédentes, **caractérisé par** la fourniture (130) d'une clé de signature de longue durée qui peut être utilisée pour une pluralité de transactions de signature et d'authentification.

4. Procédé selon la revendication 3, **caractérisé par** la fourniture d'une clé supplémentaire ou d'une pluralité de clés supplémentaires pour chiffrer ladite ou lesdites clés de signature.

5. Procédé selon l'une des revendications 3 à 4, **caractérisé par** le stockage (135, 135a) de ladite clé de signature de longue durée et/ou de ladite pluralité de clés de signature et/ou de ladite clé supplémentaire et/ou de ladite pluralité de clés supplémentaires.

6. Procédé selon l'une des revendications précédentes, **caractérisé par** la transmission de ladite ou des dites clés de signature et/ou de ladite ou des dites clés supplémentaires par le biais d'un service de message court (SMS) d'une infrastructure de communication et/ou par le biais d'une autre connexion sécurisée vers ladite première partie et/ou vers ladite deuxième partie.

7. Procédé selon l'une des revendications précédentes, **caractérisé par** l'utilisation de ladite ou des dites clés de signature pour chiffrer une communication entre ladite première partie et ladite deuxième partie.

8. Procédé selon l'une des revendications précédentes, **caractérisé par** l'utilisation de ladite ou des dites clés de signature et/ou de ladite ou des dites clés supplémentaires pour autoriser des transactions, notamment des transactions de paiement, et/ou pour accéder à des services à authentification unique.

9. Procédé selon l'une des revendications précédentes, **caractérisé par** la vérification d'une solvabilité de ladite première partie.

10. Procédé selon l'une des revendications précédentes, **caractérisé par** l'utilisation d'une clé de chiffrement Kc obtenue en utilisant un algorithme A8 selon la norme GSM comme ladite clé de signature.

11. Passerelle (CCBS) capable de mettre en oeuvre le procédé selon l'une des revendications précédentes.
